# EUROPEAN PATENT APPLICATION

(11) **EP 2 500 548 A1**
(43) Date of publication of application: **19.09.2012**
(21) Application number: 10830023.7
(22) Date of filing: 12.11.2010
(51) Int. Cl.: F02C 7/00, F01D 5/18, F01D 5/28, F01D 9/02, F01D 25/00, F04D 29/38, F04D 29/54

(54) **METHOD FOR PRODUCING VANE**

(30) Priority: 13.11.2009 JP 2009259992
(71) Applicant: IHI Corporation, Tokyo 135-8710 (JP)
(72) Inventor: MIZOKAMI, Yousuke, Tokyo 135-8710 (JP); KUROKI, Hiroshi, Tokyo 135-8710 (JP)
(74) Representative: Lamb, Martin John Carstairs
(86) International application number: PCT/JP2010/070213
(87) International publication number: WO 2011/059064

(57) **Abstract**

In a manufacturing method of a vane having an inner-ply vane within an outer-ply vane and a rear space in its inside, (a) an inner-ply vane woven-fiber formed body made of reinforcement fiber is formed on a jig corresponding to an inner surface profile of the inner-ply vane; (b) matrix is infiltrated into the inner-ply vane woven-fiber formed body to make the inner-ply vane; (c) the jig is removed; (d) a supplemental jig corresponding to the rear space and the inner-ply vane are integrated to form a integrated body; (e) an outer-ply vane woven-fiber formed body made of reinforcement fiber on a surface of the integrated body; (f) matrix is infiltrated into the outer-ply vane woven-fiber formed body to make the outer-ply vane. According to the manufacturing method, it becomes possible to manufacture a vane that can improve turbine efficiency by reducing thickness of a trailing edge of the vane.

## Description

### TECHNICAL FIELD

The present invention relates to a method for manufacturing a vane to be used in a turbine or a compressor of a gas turbine engine such as a jet engine.

### BACKGROUND ART

A turbine vane (including a turbine stator vane and a turbine rotor blade) used in a turbine of a jet engine is generally constituted of heat-resistant alloy such as nickel alloy. Meanwhile, composite material such as ceramic matrix composite (CMC) that has superior heat-resistance property to nickel alloy and lower density than nickel alloy recently draws attention. A turbine blade constituted of ceramic matrix composite (CMC turbine vane) has also been developed (see Patent Documents 1 and 2 listed below). And a CMC turbine vane is manufactured according to a following method.

Using a jig that has a surface profile corresponding to an inner surface profile of a turbine vane, ceramic fiber (fiber bundle of ceramic fiber) is woven two-dimensionally and/or three-dimensionally along a surface of the jig. By this process, a woven-fiber formed body constituted of ceramic fiber is formed on a surface of the jig. Subsequently, using an infiltration method such as Chemical Vapor Infiltration (CVI) or Polymer Impregnation and Pyrolysis (PIP), ceramic matrix is infiltrated into the woven-fiber formed body. Then, the infiltrated woven-fiber formed body is treated with a machining process and so on, and thereby a CMC turbine vane is manufactured.

### Prior Art Documents

### Patent Documents

Patent Document 1: Japanese Patent Application laid-Open No. 2001-206779
Patent Document 2: Japanese Patent Application laid-Open No. 2003-148105

### SUMMARY OF INVENTION

Generally, a CMC turbine vane is needed to be thicker as a whole than a turbine vane made of heat-resistant alloy in order to secure rigidity of the CMC turbine vane. Accompanying with this, a trailing edge of the turbine vane is subject to be thick. Meanwhile, if a trailing edge of a turbine vane is thick, mixture loss of swirls generated near the trailing edge of the turbine vane and a main flow increases. As a result, pressure loss increases and thereby it becomes difficult to improve turbine efficiency.

Note that this issue occurs not only in a turbine vane made of composite material used in a turbine of a gas turbine engine but also in a compressor vane (including a compressor stator vane and a compressor rotor blade) made of composite material used in a gas turbine compressor.

An object of the present invention is to provide a method for manufacturing a vane that can improve turbine efficiency by reducing thickness of a trailing edge of the vane.

Any of following aspects of the present invention relates to manufacturing of a vane that is to be used in a turbine or a compressor of a gas turbine engine and made of composite material constituted of reinforcement fiber and matrix, and comprises; an outer ply vane that is made of composite material constituted of reinforcement fiber and matrix; and an inner ply vane that is made of composite material constituted of reinforcement fiber and matrix, and extends from an inner surface of the outer ply vane on a leading-edge side toward an inner surface of the outer ply vane on a trailing-edge side, a convex-side outer surface thereof being stuck integrally with a convex-side inner surface of the outer ply vane, and a concave-side outer surface thereof being stuck integrally with a concave-side inner surface of the outer ply vane; wherein a rear space is segmented within the outer ply vane between an outer surface of the inner ply vane on the trailing-edge side and an inner surface of the outer ply vane on the trailing-edge side.
A first aspect of the present invention provides a method for manufacturing the above vane that comprises: (a) forming an inner ply vane woven-fiber formed body constituted of reinforcement fiber on a surface of a jig that has a surface profile corresponding to an inner surface profile of the inner ply vane; (b) infiltrating matrix into the inner ply vane woven-fiber formed body to turn the inner ply vane woven-fiber formed body into the inner ply vane; (c), during or after (b), removing the jig away from the inner ply vane woven-fiber formed body or the inner ply vane; (d), after (b) and (c), integrating a supplemental jig that has a surface profile corresponding to the rear space and the inner ply vane to form a integrated body; (e), after (d), forming an outer ply vane woven-fiber formed body constituted of reinforcement fiber on a surface of the integrated body; (f), after (e), infiltrating matrix into the outer ply vane woven-fiber formed body to turn the outer ply vane woven-fiber formed body into the outer ply vane; and (g), during or after (f), removing the supplemental jig away from the outer ply vane woven-fiber formed body or the outer ply vane.

A second aspect of the present invention provides a method for manufacturing the above vane that comprises: (A) forming an inner ply vane woven-fiber formed body constituted of reinforcement fiber on a surface of a jig that has a surface profile corresponding to an inner surface profile of the inner ply vane; (B), after (A), integrating a supplemental jig that has a surface profile corresponding to the rear space and the inner ply vane woven-fiber formed body to form a integrated body; (C), after (B), forming an outer ply vane woven-fiber formed body constituted of reinforcement fiber on a surface of the integrated body; (D), after (C), infiltrating matrix into the inner ply vane woven-fiber formed body and the outer ply vane woven-fiber formed body to turn the inner ply vane woven-fiber formed body and the outer ply vane woven-fiber formed body into the inner ply vane and the outer ply vane, respectively; and (E), during or after (D), removing the jig away from the inner ply vane woven-fiber formed body or the inner ply vane, and removing the supplemental jig away from the outer ply vane woven-fiber formed body or the outer ply vane.

A third aspect of the present invention provides a method for manufacturing the above vane that comprises: (i) forming an inner ply vane woven-fiber formed body constituted of reinforcement fiber on a surface of a jig that has a surface profile corresponding to an inner surface profile of the inner ply vane; (ii) infiltrating matrix into the inner ply vane woven-fiber formed body to turn the inner ply vane woven-fiber formed body into the inner ply vane; (iii), during or after (ii), removing the jig away from the inner ply vane woven-fiber formed body or the inner ply vane; (iv), after (ii) and (iii), integrating a rear filled member that has a surface profile corresponding to the rear space and the inner ply vane to form a integrated body; (v), after (iv), forming an outer ply vane woven-fiber formed body constituted of reinforcement fiber on a surface of the integrated body; and (vi), after (v), infiltrating matrix into the outer ply vane woven-fiber formed body to turn the outer ply vane woven-fiber formed body into the outer ply vane.

A fourth aspect of the present invention provides a method for manufacturing the above vane that comprises: (I) forming an inner ply vane woven-fiber formed body constituted of reinforcement fiber on a surface of a jig that has a surface profile corresponding to an inner surface profile of the inner ply vane; (II), after (I), integrating a rear filled member that has a surface profile corresponding to the rear space and the inner ply vane woven-fiber formed body to form a integrated body; (III), after (II), forming an outer ply vane woven-fiber formed body constituted of reinforcement fiber on a surface of the integrated body; (IV), after (III), infiltrating matrix into the inner ply vane woven-fiber formed body and the outer ply vane woven-fiber formed body to turn the inner ply vane woven-fiber formed body and the outer ply vane woven-fiber formed body into the inner ply vane and the outer ply vane, respectively; and (V), during or after (IV), removing the jig away from the inner ply vane woven-fiber formed body or the inner ply vane.

According to the above aspects, since a portion from a leading edge to an intermediate position in the vane made of composite material can be made thick and a portion from the intermediate position to a trailing edge can be made thin, rigidity of the vane made of composite material can be secured and also the trailing edge of the vane can be made thin. As a result, since pressure loss near the trailing edge of the vane can be restricted, turbine efficiency or compressor efficiency can be improved.

Here, it is preferable that the composite material is ceramic matrix composite or carbon-based composite material. Since ceramic matrix composite or carbon-based composite material has higher heatproof temperature than metal, cooling of the vane under high temperature environment can be eliminated or cooling air volume can be reduced and the efficiency can be improved. In addition, since ceramic matrix composite or carbon-based composite material has lower density than metal and can reduce component weight, weight reduction can be achieved and fuel consumption rate can be improved.

Note that, in the present application, a term "vane" includes a "turbine vane" and a "compressor vane". In addition, a term "turbine vane" includes a "turbine stator vane" and a "turbine rotor blade". Further, a term "compressor vane" includes a "compressor stator vane" and a "compressor rotor blade".

### BRIEF DESCRIPTION OF DRAWINGS

**[****Fig. 1****]** is a cross-sectional view of a turbine stator vane (a cross-sectional view take along a line I-I shown in Fig. 2).
**[****Fig. 2****]** is a side view of a turbine stator segment (partially cross-sectioned).
**[****Fig. 3****]** is a cross-sectional view of a turbine stator vane (another configuration).
**[****Fig. 4]** Fig. 4 is a flowchart of a method for manufacturing the turbine stator vane according to a first embodiment.
**[****Fig. 5]** Fig. 5(a) is an explanatory drawing of an inner ply vane woven-fiber forming process in the first [second, third, forth] embodiment, Fig. 5(b) is an explanatory drawing of an inner ply vane infiltration process in the first [third] embodiment, and Fig. 5(c) is an explanatory drawing of a jig removal process in the first [third] embodiment.
**[****Fig. 6]** Fig. 6(a) is an explanatory drawing of an integrating process in the first embodiment, and Fig. 6(b) is an explanatory drawing of an outer ply vane woven-fiber forming process.
**[****Fig. 7]** Fig. 7 (a) is an explanatory drawing of an outer ply vane infiltration process in the first embodiment, and Fig. 7(b) is an explanatory drawing of a supplemental jig removal process.
**[****Fig. 8]** Fig. 8 is a flowchart of a method for manufacturing the turbine stator vane according to a second embodiment.
**[****Fig. 9]** Fig. 9 (a) is an explanatory drawing of an integrating process in the second embodiment, and Fig. 9(b) is an explanatory drawing of an outer ply vane woven-fiber forming process.
**[****Fig. 10]** Fig. 10 (a) is an explanatory drawing of an outer ply vane infiltration process in the second embodiment, and Fig. 10(b) is an explanatory drawing of a removal process.
**[****Fig. 11]** Fig. 11 is a flowchart of a method for manufacturing the turbine stator vane according to a third embodiment.
**[****Fig. 12]** Fig. 12(a) is an explanatory drawing of an integrating process in the third embodiment, and Fig. 12 (b) is an explanatory drawing of an outer ply vane woven-fiber forming process.
**[****Fig. 13]** Fig. 13 is an explanatory drawing of an outer ply vane infiltration process in the third embodiment.
**[****Fig. 14]** Fig. 14 is a flowchart of a method for manufacturing the turbine stator vane according to a fourth embodiment.
**[****Fig. 15]** Fig. 15(a) is an explanatory drawing of an integrating process in the fourth embodiment, and Fig. 15(b) is an explanatory drawing of an outer ply vane woven-fiber forming process.
**[****Fig. 16]** Fig. 16(a) is an explanatory drawing of an infiltration process in the fourth embodiment, and Fig. 16(b) is an explanatory drawing of a removal process.

### DESCRIPTION OF EMBODIMENTS

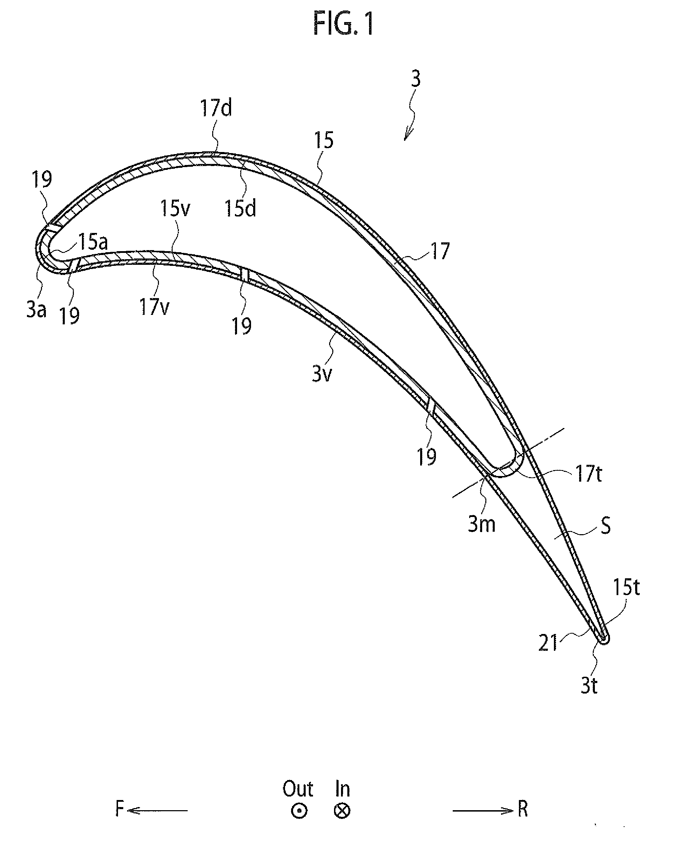

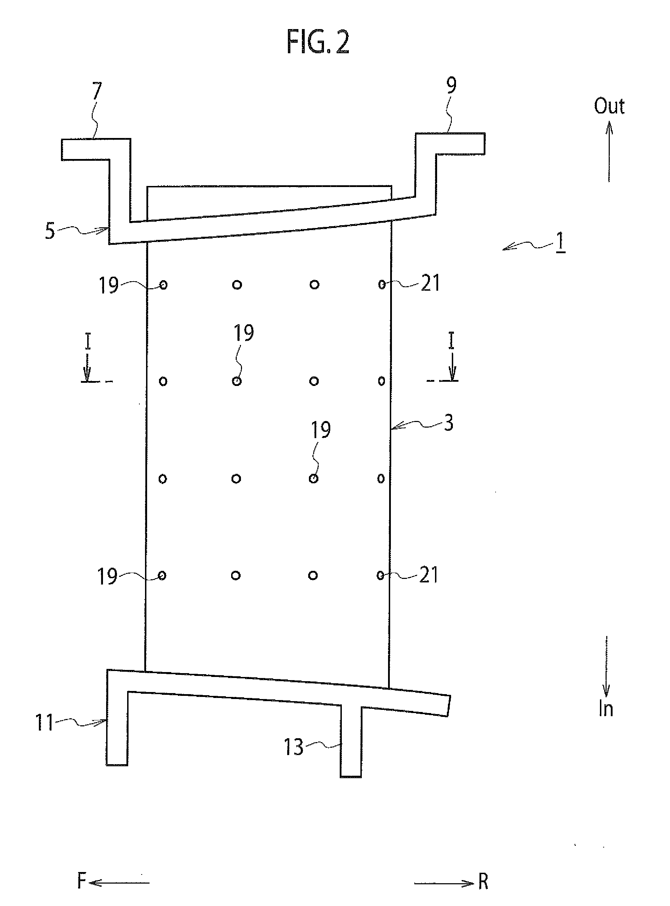

First, a turbine stator vane 3 manufactured by after-described embodiments of a manufacturing method will be explained with reference to Figs. 1 and 2. Note that, in the drawings, an "F" indicates a forward direction (an upstream direction), an "R" in the drawings indicates a rearward direction (a downstream direction), an "In" indicates a radially-inward direction, and an "Out" indicates a radially-outward direction.

A turbine stator (turbine nozzle) used in a turbine (not shown) of a jet engine is segmented into plural turbine stator segments (turbine nozzle segments) 1 along its circumferential direction (see Fig. 2).

The turbine stator segment 1 includes plural turbine stator vanes 3 (only one of them is shown). The turbine stator vane 3 is constituted of Ceramic Matrix Composites (a type of composite materials, hereinafter referred to as CMC) that is made of ceramic matrix (a type of matrixes) and ceramic fiber (a type of reinforcement fibers). Note that a detail constitution of the turbine stator vane 3 will be described later.

An arch-shaped outer band 5 is provided integrally on an outer end (radially outer end) of the turbine stator vane 3. The outer band 5 is constituted of heat-resistant alloy such as nickel alloy. In addition, an arch-shaped front flange 7 that is to be engaged with a portion of a turbine case (not shown) is formed on a front side of the outer band 5. Similarly, an arch-shaped rear flange 9 that is to be engaged with a portion of the turbine case is formed on a rear side of the outer band 5. Note that the outer band 5 may be constituted of composite materials such as CMC and carbon-based composite materials instead of heat-resistant alloy.

An arch-shaped inner band 11 is provided integrally on an inner end (radially inner end) of the turbine stator vane 3. The inner band 11 is constituted of heat-resistant alloy such as nickel alloy. In addition, an arch-shaped rib 13 that is to be fit with a groove (not shown) on a stator support member integrally coupled with the turbine case. Note that the inner band 11 may be constituted of composite materials such as CMC and carbon-based composite materials instead of heat-resistant alloy.

Next, a detail constitution of the turbine stator vane 3 will be explained.

As shown in Fig. 1, the turbine stator vane 3 includes a hollow outer ply vane (an outer vane) 15. The outer ply vane 15 is constituted of CMC that is made of ceramic fiber and ceramic matrix. Note that carbon fiber, glass fiber or blending fiber of these (blending fiber made of two or more kinds of ceramic fiber, carbon fiber and glass fiber) may be used instead of ceramic fiber. Note that carbon matrix or glass matrix may be used instead of ceramic matrix.

An inner ply vane (inner vane) 17 is provided integrally on an inner surface of the outer ply vane 15. The inner ply vane 17 is constituted of CMC that is made of ceramic fiber and ceramic matrix. In addition, the inner ply vane 17 extends from an inner surface 15a of the outer ply vane 15 on a leading-edge side toward an inner surface 15t of the outer ply vane 15 on a trailing-edge side. An outer surface 17t of the inner ply vane 17 on the trailing-edge side is positioned nearer to the trailing-edge side than a middle position (middle position along a chord length) of the inner ply vane 17. Further, an outer surface 17d of the inner ply vane 17 on a convex-side is stuck integrally with a convex-side inner surface 15d of the outer ply vane 15. Similarly, an outer surface 17v of the inner ply vane 17 on a concave-side is stuck integrally with a concave-side inner surface 15v of the outer ply vane 15. Note that carbon fiber, glass fiber or blending fiber of these may be used instead of ceramic fiber. In addition, carbon matrix or glass matrix may be used instead of ceramic matrix.

Then, a rear space S is segmented within the outer ply vane 15 between the outer surface 17t of the inner ply vane 17 on the trailing-edge side and the inner surface 15t of the outer ply vane 15 on the trailing-edge side.

Plural outlet holes 19 are formed on a leading edge 3a and a concave surface 3v of the turbine stator vane 3 to inject cooling air introduced into an inside of the inner ply vane 17 through a front insert (not shown). Each of the outlet holes 19 penetrates the outer ply vane 15 and the inner ply vane 17. In addition, plural eduction holes 21 are formed on a trailing edge 3t of the turbine stator vane 3 to discharge cooling air introduced into an inside of the rear space S through a rear insert (not shown) . Each of the eduction holes 21 penetrates the outer ply vane 15. Note that the cooling air is compressed air extracted from a compressor (not shown) of the jet engine.

Next, advantages of the turbine stator vane 3 will be explained.

As described above, the hollow inner ply vane 17 is integrally provided on the inner surface of the hollow outer ply vane 15, and the rear space S is segmented between the outer surface 17t of the inner ply vane 17 on the trailing-edge side and the inner surface 15t of the inner ply vane 15 on the trailing-edge side. Therefore, a portion of the turbine stator vane 3 from the leading edge 3a to an intermediate position 3m (i.e. just anterior to the inner surface 15t of the inner ply vane 15 on the trailing-edge side) constructs a double ply structure with the outer ply vane 15 and the inner ply vane 17. A portion from the intermediate position 3m to the trailing edge 3t constructs a single ply structure only with the outer ply vane 15. As a result, the portion from the leading edge 3a to the intermediate position 3m in the turbine stator vane 3 made of CMC can be made thick and the portion from the intermediate position 3m to the trailing edge 3t can be made thin.

Therefore, according to the turbine stator vane 3, rigidity of the turbine stator vane 3 made of CMC is secured and also the trailing edge 3t is made thin, so that it becomes possible to restrict a rise of pressure loss near the trailing edge 3t and thereby to improve turbine efficiency.

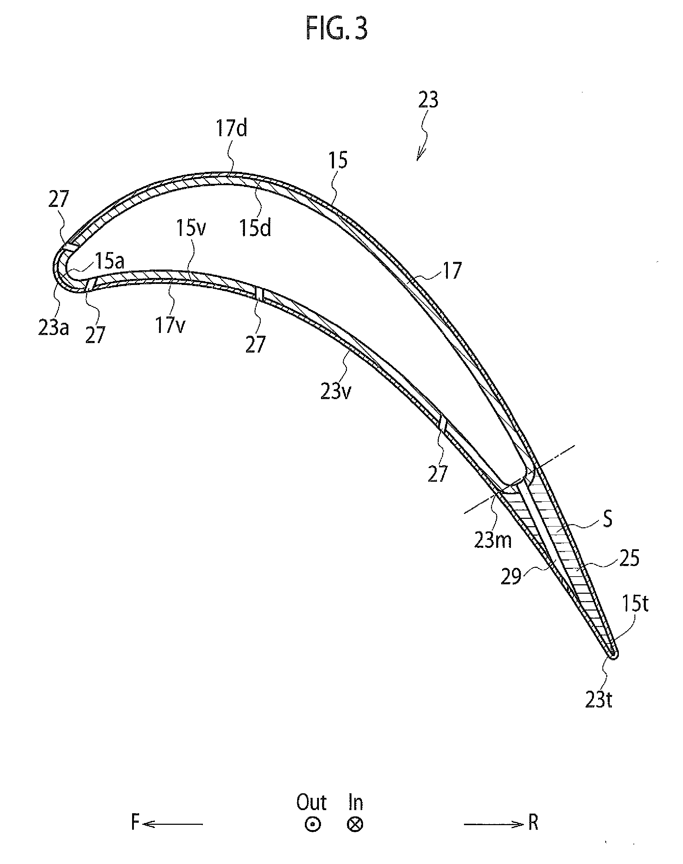

Next, another configuration of a turbine stator vane manufactured by after-described embodiments of a manufacturing method will be explained with reference to Fig. 3.

As shown in Fig. 3, a turbine stator vane 23 is used in a turbine of a jet engine, and schematically has the same configurations as those of the above-explained turbine stator vane 3. Only different points from the specific configurations of the turbine stator vane 3 will be explained among the specific configurations of the turbine stator vane 23. Note that the configurations of the turbine stator vane 23 identical or similar to the configurations of the turbine stator vane 3 will be indicated by identical reference numerals in the drawings and their explanations will be avoided.

In the turbine stator vane 23, the rear space S is filled with a rear filled member (rear core member) 25. The rear filled member 25 is provided integrally with the outer ply vane 15 and the inner ply vane 17.

Plural outlet holes 27 are formed on a leading edge 23a and a concave surface 23v of the turbine stator vane 23 to inject cooling air introduced into the inside of the inner ply vane 17 through the front insert (not shown). Each of the outlet holes 27 penetrates the outer ply vane 15 and the inner ply vane 17. In addition, plural eduction holes 29 are formed on a trailing edge 23t of the turbine stator vane 23 to discharge the cooling air introduced into the inside of the rear space S through the rear insert (not shown). Each of the eduction holes 29 penetrates the outer ply vane 15, the rear filled member 25 and the inner ply vane 17.

Note that the turbine stator vane 23 can also bring the same advantages as the above-explained turbine stator vane 3. However, in the turbine stator vane 23, the rear space S of the above-explained turbine stator vane 3 is filled with the rear filled member 25. Strength and rigidity of vane trailing edge portion of the turbine stator vane 23 can be improved by filling of the rear filled member 25.

### (First Embodiment)

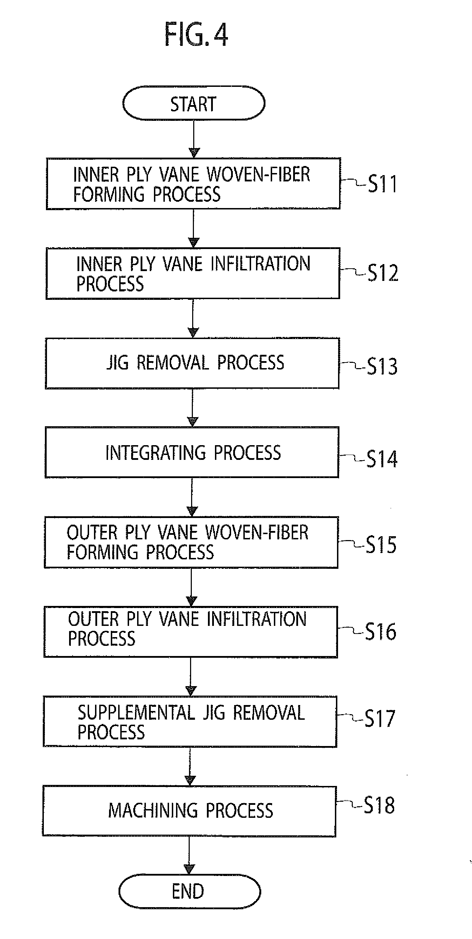

A method for manufacturing a turbine stator vane according to a first embodiment will be explained with reference to a flow chart shown in Fig. 4 and Figs. 5(a) to 7(b).

The method for manufacturing a turbine stator vane according to the present embodiment is a method for manufacturing the turbine stator vane 3 shown in Fig. 1. The present method includes an inner ply vane woven-fiber forming process, an inner ply vane infiltration process, a jig removal process, an integrating process, an outer ply vane woven-fiber forming process, an outer ply vane infiltration process, a supplemental jig removal process, and a machining process. Then, specific workings in the processes in the manufacturing method according to the present embodiment are presented as follows.

### (Step S11) Inner ply Vane Woven-Fiber Forming Process

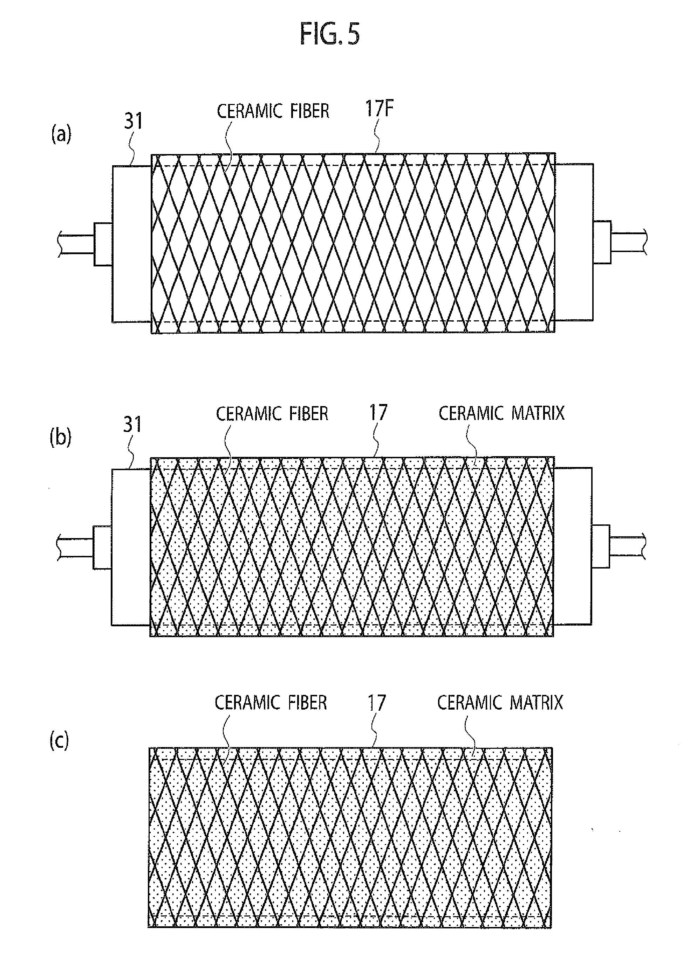

As shown in Fig. 5(a), using a jig 31 that has a surface profile corresponding to an inner surface profile of the inner ply vane 17, ceramic fiber (fiber bundle of ceramic fiber) is woven two-dimensionally and/or three-dimensionally along a surface of the jig 31 in braid weave, plain weave or the like. By this process, an inner ply vane woven-fiber formed body 17F constituted of ceramic fiber is formed on the surface of the jig 31. Note that arbitrary changes can be applied to a weave style of the ceramic fiber.

### (Step S12) Inner Ply Vane Infiltration Process

As shown in Fig. 5 (b), after the inner ply vane woven-fiber forming process, ceramic matrix is infiltrated into the inner ply vane woven-fiber formed body 17F by a Chemical Vapor Infiltration method (CVI method), a Polymer Impregnation and Pyrolysis method (PIP method), a Solid Phase Infiltration method and so on. By this process, the inner ply vane woven-fiber formed body 17F is turned into the inner ply vane 17. Note that arbitrary changes can be applied to an infiltration method of the ceramic matrix.

### (Step S13) Jig Removal Process

As shown in Fig. 5 (c), during or after the inner ply vane infiltration process, the jig 31 is moved laterally, so that the jig 31 is removed away from the inner ply vane woven-fiber formed body 17F or the inner ply vane 17.

### (Step S14) Integrating Process

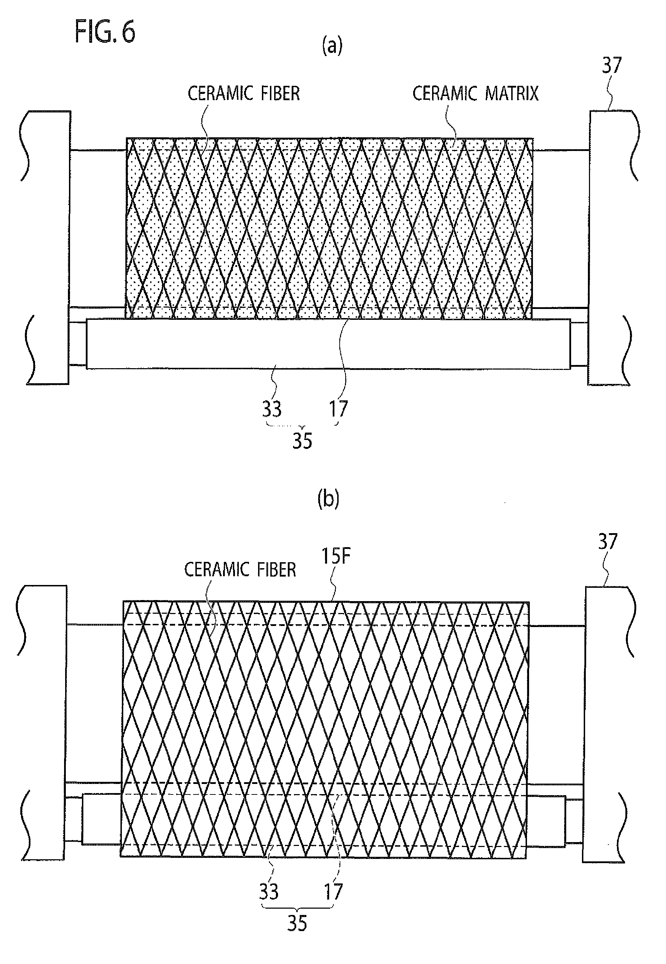

As shown in Fig. 6(a), after the inner ply vane infiltration process and the jig removal process, a supplemental jig 33 that has a surface profile corresponding to the rear space S and the inner ply vane 17 are set to their prescribed positions on an integrating jig 37. Here, the inner ply vane 17 and the supplemental jig 33 are adjacently integrated. By this process, an integrated body 35 composed of the inner ply vane 17 and the supplemental jig 33 is formed.

### (Step S15) Outer Ply Vane Woven-Fiber Forming Process

As shown in Fig. 6(b), after the integrating process, ceramic fiber (fiber bundle of ceramic fiber) is woven two-dimensionally and/or three-dimensionally along a surface of the integrated body 35 in braid weave, plain weave or the like. By this process, an outer ply vane woven-fiber formed body 15F constituted of ceramic fiber is formed on the surface of the integrated body 35. Note that arbitrary changes can be applied to a weave style of the ceramic fiber. In addition, the outer ply vane woven-fiber formed body 15F may be formed by winding woven-fiber made of ceramic fiber on the surface of the integrated body 35 instead of by weaving the ceramic fiber.

### (Step S16) Outer Ply Vane Infiltration Process

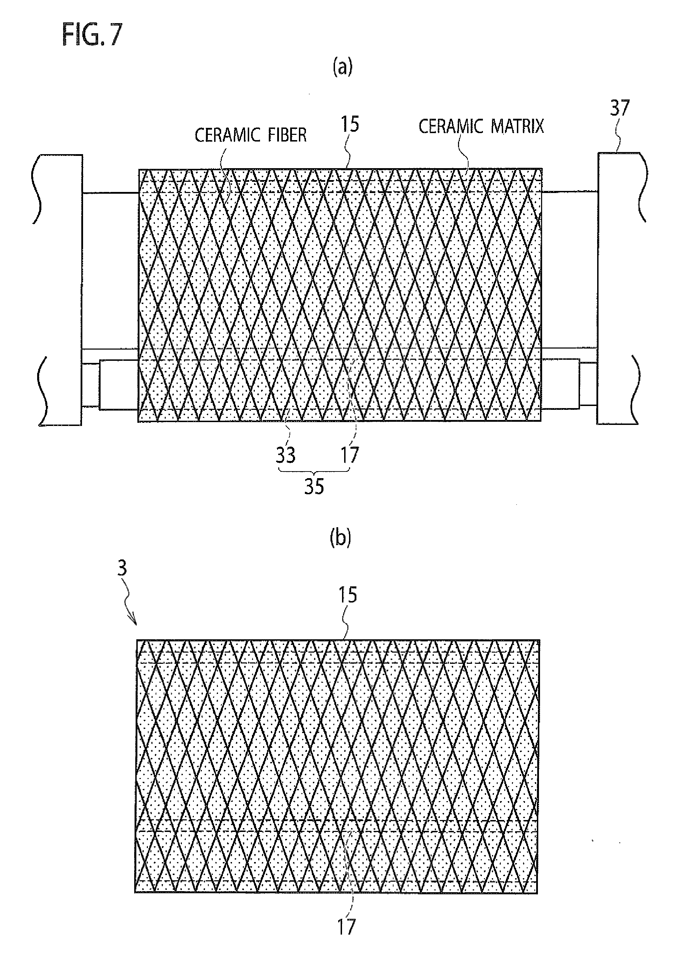

As shown in Fig. 7 (a), after the outer ply vane woven-fiber forming process, ceramic matrix is infiltrated into the outer ply vane woven-fiber formed body 15F by a Chemical Vapor Infiltration method (CVI method), a Polymer Impregnation and Pyrolysis method (PIP method), a Solid Phase Infiltration method and so on. By this process, the outer ply vane woven-fiber formed body 15F is turned into the outer ply vane 15. Note that arbitrary changes can be applied to an infiltration method of the ceramic matrix.

### (Step S17) Supplemental Jig Removal Process

As shown in Fig. 7 (b), during or after the outer ply vane infiltration process, the supplemental jig 33 is moved laterally, so that the supplemental jig 33 is removed away from the outer ply vane woven-fiber formed body 15F or the outer ply vane 15.

### (Step S18) Machining Process

After the removal process, the outlet holes 19 and the eduction holes 21 are formed by a machining process. Note that it is preferable that a coating process may be treated on surfaces of the outer ply vane 15 and the inner ply vane 17 by an arbitrary infiltration method after forming the outlet holes 19 and the eduction holes 21.

The turbine stator vane 3 made of CMC is manufactured in this manner.

Subsequently, advantages of the first embodiment will be explained.

As described above, the integrated body 35 is formed by the supplemental jig 33 that has the surface profile corresponding to the rear space S and the inner ply vane 17, and the outer ply vane woven-fiber formed body 15F is formed on the surface of the integrated body 35. Therefore, the portion of the turbine stator vane 3 from the leading edge 3a to the intermediate position 3m (i.e. just anterior to the inner surface 15t of the inner ply vane 15 on the trailing-edge side) constructs a double ply structure with the outer ply vane 15 and the inner ply vane 17. The portion from the intermediate position 3m to the trailing edge 3t constructs a single ply structure only with the outer ply vane 15. As a result, the portion from the leading edge 3a to the intermediate position 3m in the turbine stator vane 3 made of CMC can be made thick and the portion from the intermediate position 3m to the trailing edge 3t can be made thin.

Therefore, the first embodiment can bring the same advantages as the above-explained turbine stator vane 3.

### (Second Embodiment)

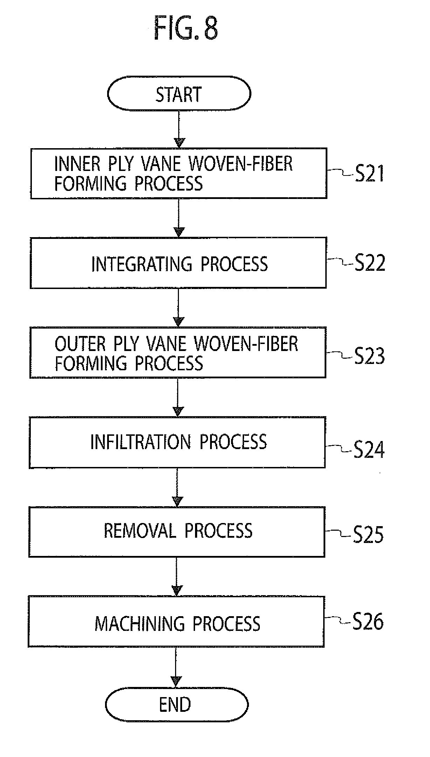

A method for manufacturing a turbine stator vane according to a second embodiment will be explained with reference to a flow chart shown in Fig. 8, Fig. 5(a) and Figs. 9(a) to 10(b).

The method for manufacturing a turbine stator vane according to the present embodiment is a method for manufacturing the turbine stator vane 3 shown in Fig. 1. The present method includes an inner ply vane woven-fiber forming process, an integrating process, an outer ply vane woven-fiber forming process, an infiltration process, a removal process, and a machining process. Then, specific workings in the processes in the manufacturing method according to the present embodiment are presented as follows.

### (Step S21) Inner ply Vane Woven-Fiber Forming Process

As shown in Fig. 5(a), by carrying out a process similar to the inner ply vane woven-fiber forming process (step S11) in the first embodiment, an inner ply vane woven-fiber formed body 17F constituted of ceramic fiber is formed on a surface of a jig 31.

### (Step S22) Integrating Process

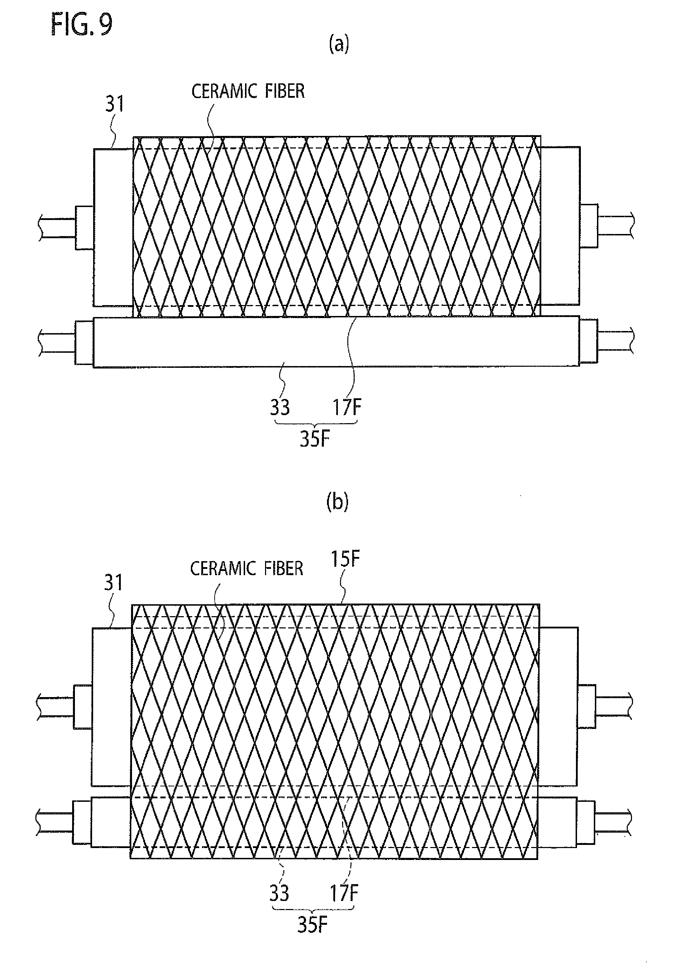

As shown in Fig. 9(a), after the inner ply vane infiltration process, a supplemental jig 33 that has a surface profile corresponding to the rear space S and the inner ply vane woven-fiber formed body 17F are adjacently integrated. By this process, an integrated body 35F composed of the inner ply vane woven-fiber formed body 17F and the supplemental jig 33 is formed.

### (Step S23) Outer Ply Vane Woven-Fiber Forming Process

As shown in Fig. 9(b), after the integrating process, by carrying out a process similar to the outer ply vane woven-fiber forming process (step S15) in the first embodiment, an outer ply vane woven-fiber formed body 15F constituted of ceramic fiber is formed on the surface of the integrated body 35F.

### (Step S24) Infiltration Process

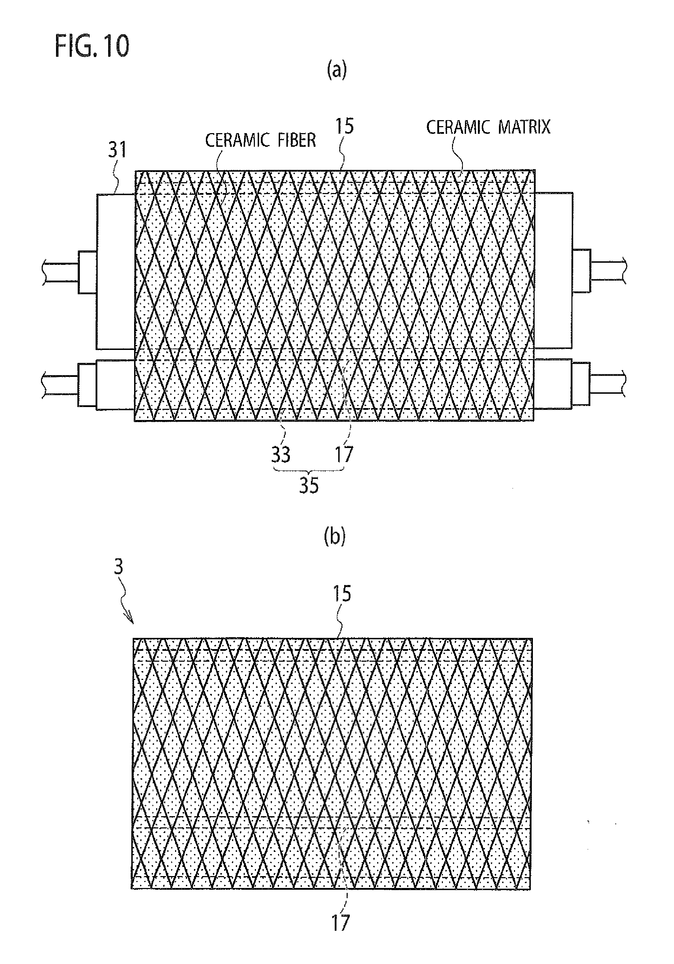

As shown in Fig. 10(a), after the outer ply vane woven-fiber forming process, ceramic matrix is infiltrated into the outer ply vane woven-fiber formed body 15F and the inner ply vane woven-fiber formed body 17F by a Chemical Vapor Infiltration method (CVI method), a Polymer Impregnation and Pyrolysis method (PIP method), a Solid Phase Infiltration method and so on. By this process, the outer ply vane woven-fiber formed body 15F and the inner ply vane woven-fiber formed body 17F are turned into the outer ply vane 15 and the inner ply vane 17, respectively.

### (Step S25) Removal Process

As shown in Fig. 10(b), during or after the infiltration process, the jig 31 and the supplemental jig 33 are moved laterally, so that the jig 31 is removed away from the inner ply vane woven-fiber formed body 17F or the inner ply vane 17 and the supplemental jig 33 is removed away from the outer ply vane woven-fiber formed body 15F or the outer ply vane 15.

### (Step S26) Machining Process

After the removal process, the outlet holes 19 and the eduction holes 21 are formed by carrying out a process similar to the machining process (step S18) in the first embodiment. Note that it is preferable that a coating process may be treated on surfaces of the outer ply vane 15 and the inner ply vane 17 by an arbitrary infiltration method after forming the outlet holes 27 and the eduction holes 29.

The turbine stator vane 3 made of CMC is manufactured in this manner.

Subsequently, advantages of the second embodiment will be explained.

As described above, the integrated body 35F is formed by the supplemental jig 33 that has the surface profile corresponding to the rear space S and the inner ply vane woven-fiber formed body 17F, and the outer ply vane woven-fiber formed body 15F is formed on the surface of the integrated body 35F. Therefore, the portion of the turbine stator vane 3 from the leading edge 3a to the intermediate position 3m (i.e. just anterior to the inner surface 15t of the inner ply vane 15 on the trailing-edge side) constructs a double ply structure with the outer ply vane 15 and the inner ply vane 17. The portion from the intermediate position 3m to the trailing edge 3t constructs a single ply structure only with the outer ply vane 15. As a result, the portion from the leading edge 3a to the intermediate position 3m in the turbine stator vane 3 made of CMC can be made thick and the portion from the intermediate position 3m to the trailing edge 3t can be made thin.

Therefore, the second embodiment can bring the same advantages as the above-explained turbine stator vane 3.

### (Third Embodiment)

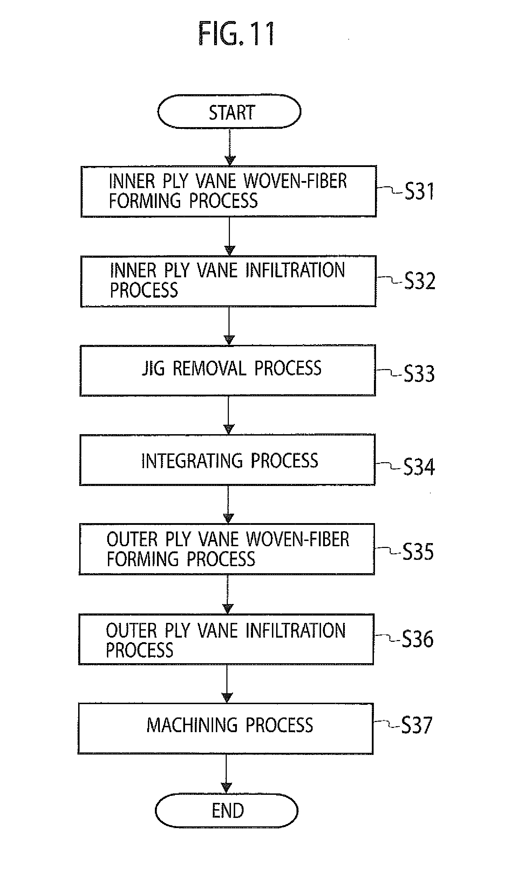

A method for manufacturing a turbine stator vane according to a third embodiment will be explained with reference to a flow chart shown in Fig. 11, Figs. 5(a) to (c), Figs. 12(a) to 13 and Fig. 16(b).

The method for manufacturing a turbine stator vane according to the present embodiment is a method for manufacturing the turbine stator vane 23 shown in Fig. 3. The present method includes an inner ply vane woven-fiber forming process, an inner ply vane infiltration process, an integrating process, an outer ply vane woven-fiber forming process, an outer ply vane infiltration process, a jig removal process, and a machining process. Then, specific workings in the processes in the manufacturing method according to the present embodiment are presented as follows.

### (Step S31) Inner ply Vane Woven-Fiber Forming Process

As shown in Fig. 5(a), by carrying out a process similar to the inner ply vane woven-fiber forming process (step S11) in the first embodiment, an inner ply vane woven-fiber formed body 17F constituted of ceramic fiber is formed on a surface of a jig 31.

### (Step S32) Inner Ply Vane Infiltration Process

As shown in Fig. 5 (b), after the inner ply vane woven-fiber forming process, by carrying out a process similar to the inner ply vane infiltration process (step S12) in the first embodiment, the inner ply vane woven-fiber formed body 17F is turned into the inner ply vane 17.

### (Step S33) Jig Removal Process

As shown in Fig. 5 (c), during or after the inner ply vane infiltration process, by carrying out a process similar to the jig removal process (step S13) in the first embodiment, the jig 31 is removed away from the inner ply vane woven-fiber formed body 17F or the inner ply vane 17.

### (Step S34) Integrating Process

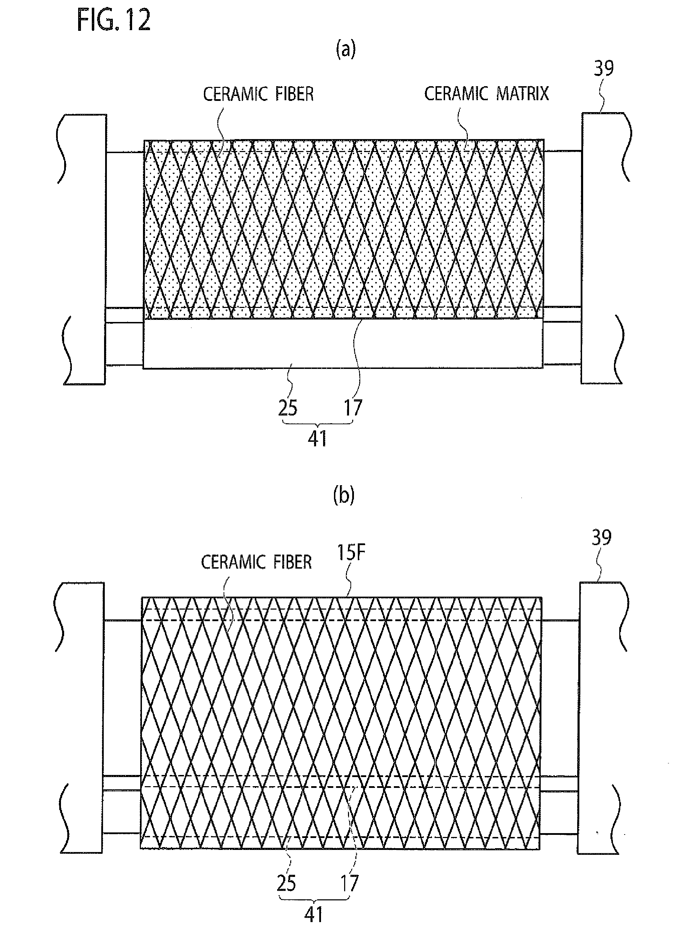

As shown in Fig. 12(a), after the inner ply vane infiltration process and the jig removal process, the rear filled member 25 that has a surface profile corresponding to the rear space S and the inner ply vane 17 are set to their prescribed positions on an integrating jig 39. Here, the inner ply vane 17 and the rear filled member 25 are adjacently integrated. By this process, an integrated body 41 composed of the inner ply vane 17 and the rear filled member 25 is formed.

### (Step S35) Outer Ply Vane Woven-Fiber Forming Process

As shown in Fig. 12(b), after the integrating process, by carrying out a process similar to the outer ply vane woven-fiber forming process (step S15) in the first embodiment, an outer ply vane woven-fiber formed body 15F constituted of ceramic fiber is formed on the surface of the integrated body 41.

### (Step S36) Outer Ply Vane Infiltration Process

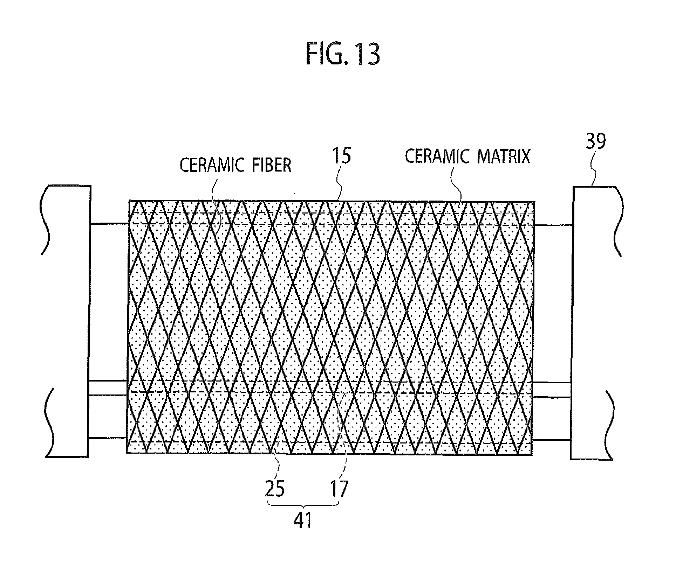

As shown in Fig. 13, after the outer ply vane woven-fiber forming process, ceramic matrix is infiltrated into the outer ply vane woven-fiber formed body 15F by a Chemical Vapor Infiltration method (CVI method), a Polymer Impregnation and Pyrolysis method (PIP method), a Solid Phase Infiltration method and so on. By this process, the outer ply vane woven-fiber formed body 15F is turned into the outer ply vane 15. Note that arbitrary changes can be applied to an infiltration method of the ceramic matrix. Although the integrating jig 39 is removed away during or after this process, the rear filled member 25 remains in the rear space S.

### (Step S37) Machining Process

After the outer ply vane infiltration process, the outlet holes 27 and the eduction holes 29 are formed by a machining process. In addition, superfluous portions of the rear filled member 25 that protrudes from the outer ply vane 15 are also removed in this process. Note that it is preferable that a coating process may be treated on surfaces of the outer ply vane 15 and the inner ply vane 17 by an arbitrary infiltration method after forming the outlet holes 27 and the eduction holes 29.

The turbine stator vane 23 made of CMC is manufactured in this manner.

Subsequently, advantages of the third embodiment will be explained.

As described above, the integrated body 41 is formed by the rear filled member 25 that has the surface profile corresponding to the rear space S and the inner ply vane 17, and the outer ply vane woven-fiber formed body 15F is formed on the surface of the integrated body 41. Therefore, the portion of the turbine stator vane 23 from the leading edge 23a to the intermediate position 23m (i.e. just anterior to the inner surface 15t of the inner ply vane 15 on the trailing-edge side) constructs a double ply structure with the outer ply vane 15 and the inner ply vane 17. The portion from the intermediate position 23m to the trailing edge 23t constructs a single ply structure only with the outer ply vane 15. As a result, the portion from the leading edge 23a to the intermediate position 23m in the turbine stator vane 23 made of CMC can be made thick and the portion from the intermediate position 23m to the trailing edge 23t can be made thin.

Therefore, the third embodiment can bring the same advantages as the above-explained turbine stator vane 23.

### (Fourth Embodiment)

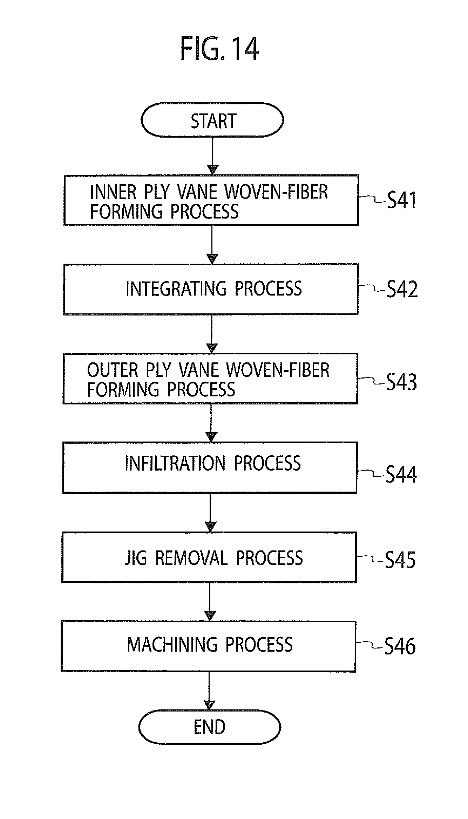

A method for manufacturing a turbine stator vane according to a fourth embodiment will be explained with reference to a flow chart shown in Fig. 14, Fig. 5 (a) and Figs. 15(a) to 16(b).

The method for manufacturing a turbine stator vane according to the fourth embodiment is a method for manufacturing the turbine stator vane 23 shown in Fig. 3. The present method includes an inner ply vane woven-fiber forming process, an integrating process, an outer ply vane woven-fiber forming process, an infiltration process, a jig removal process, and a machining process. Then, specific workings in the processes in the manufacturing method according to the present embodiment are presented as follows.

### (Step S41) Inner ply Vane Woven-Fiber Forming Process

As shown in Fig. 5(a), by carrying out a process similar to the inner ply vane woven-fiber forming process (step S11) in the first embodiment, an inner ply vane woven-fiber formed body 17F constituted of ceramic fiber is formed on a surface of a jig 31.

### (Step S42) Integrating Process

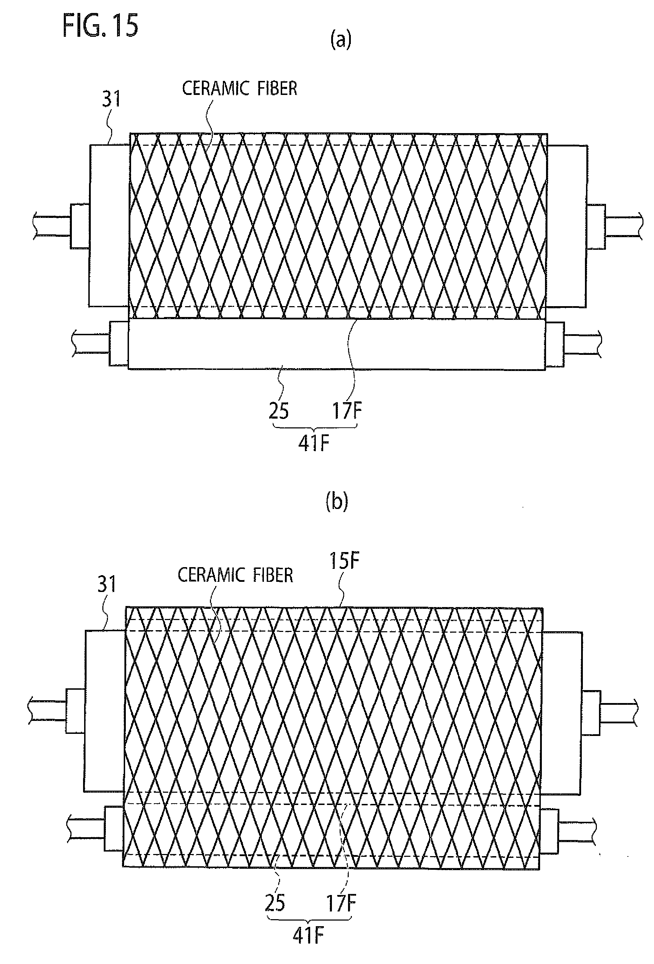

As shown in Fig. 15(a), after the inner ply vane infiltration process, the rear filled member 25 that has a surface profile corresponding to the rear space S and the inner ply vane woven-fiber formed body 17F are adjacently integrated. By this process, an integrated body 41F composed of the inner ply vane woven-fiber formed body 17F and the rear filled member 25 is formed.

### (Step S43) Outer Ply Vane Woven-Fiber Forming Process

As shown in Fig. 15(b), after the integrating process, by carrying out a process similar to the outer ply vane woven-fiber forming process (step S15) in the first embodiment, an outer ply vane woven-fiber formed body 15F constituted of ceramic fiber is formed on the surface of the integrated body 41F.

### (Step S44) Infiltration Process

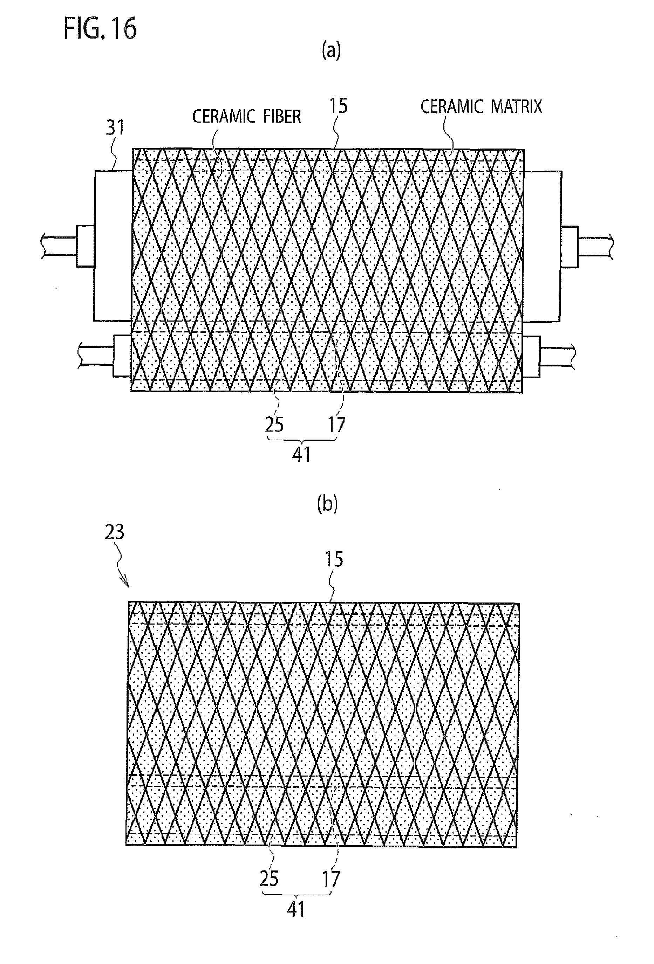

As shown in Fig. 16(a), after the outer ply vane woven-fiber forming process, ceramic matrix is infiltrated into the outer ply vane woven-fiber formed body 15F and the inner ply vane woven-fiber formed body 17F by a Chemical Vapor Infiltration method (CVI method), a Polymer Impregnation and Pyrolysis method (PIP method), a Solid Phase Infiltration method and so on. By this process, the outer ply vane woven-fiber formed body 15F and the inner ply vane woven-fiber formed body 17F are turned into the outer ply vane 15 and the inner ply vane 17, respectively.

### (Step S45) Jig Removal Process

As shown in Fig. 16(b), during or after the infiltration process, by carrying out a process similar to the jig removal process (step S33) in the third embodiment, the jig 31 is removed away from the inner ply vane woven-fiber formed body 17F. Although the jig 31 is removed away, the rear filled member 25 remains in the rear space S.

### (Step S46) Machining Process

After the jig removal process, the outlet holes 27 and the eduction holes 29 are formed by carrying out a process similar to the machining process (step S37) in the third embodiment. In addition, superfluous portions of the rear filled member 25 that protrudes from the outer ply vane 15 are also removed in this process. Note that it is preferable that a coating process may be treated on surfaces of the outer ply vane 15 and the inner ply vane 17 by an arbitrary infiltration method after forming the outlet holes 27 and the eduction holes 29.

The turbine stator vane 23 made of CMC is manufactured in this manner.

Subsequently, advantages of the fourth embodiment will be explained.

The integrated body 41F is formed by integrating the rear filled member 25 that has the surface profile corresponding to the rear space S and the inner ply vane woven-fiber formed body 17F, and the outer ply vane woven-fiber formed body 15F is formed on the surface of the integrated body 41F. Therefore, the portion of the turbine stator vane 23 from the leading edge 23a to the intermediate position 23m (i.e. just anterior to the inner surface 15t of the inner ply vane 15 on the trailing-edge side) constructs a double ply structure with the outer ply vane 15 and the inner ply vane 17. The portion from the intermediate position 23m to the trailing edge 23t constructs a single ply structure only with the outer ply vane 15. As a result, the portion from the leading edge 23a to the intermediate position 23m in the turbine stator vane 23 made of CMC can be made thick and the portion from the intermediate position 23m to the trailing edge 23t can be made thin.

Therefore, the fourth embodiment can bring the same advantages as the above-explained turbine stator vane 23.

Note that the present invention is not limited to the above descriptions in the embodiments. For example, the configuration of the turbine stator vane 3, 23 can be applied to a turbine rotor blade, a compressor stator vane, a compressor rotor blade or the like. In addition, the method according to the first to fourth embodiments can be applied to a method for manufacturing a turbine rotor blade, a compressor stator vane, a compressor rotor blade or the like. The present invention can be carried out in other various ways. In addition, a scope of right included in the present invention is not limited to the above embodiments.

## Claims

1. A method for manufacturing a vane that is to be used in a turbine or a compressor of a gas turbine engine and made of composite material constituted of reinforcement fiber and matrix,
the vane comprising:
an outer ply vane that is made of composite material constituted of reinforcement fiber and matrix; and
an inner ply vane that is made of composite material constituted of reinforcement fiber and matrix, and extends from an inner surface of the outer ply vane on a leading-edge side toward an inner surface of the outer ply vane on a trailing-edge side, a convex-side outer surface thereof being stuck integrally with a convex-side inner surface of the outer ply vane, and a concave-side outer surface thereof being stuck integrally with a concave-side inner surface of the outer ply vane;
wherein a rear space is segmented within the outer ply vane between an outer surface of the inner ply vane on the trailing-edge side and an inner surface of the outer ply vane on the trailing-edge side, and
the method comprising:
(a) forming an inner ply vane woven-fiber formed body constituted of reinforcement fiber on a surface of a jig that has a surface profile corresponding to an inner surface profile of the inner ply vane;
(b) infiltrating matrix into the inner ply vane woven-fiber formed body to turn the inner ply vane woven-fiber formed body into the inner ply vane;
(c) during or after (b), removing the jig away from the inner ply vane woven-fiber formed body or the inner ply vane;
(d) after (b) and (c), integrating a supplemental jig that has a surface profile corresponding to the rear space and the inner ply vane to form a integrated body;
(e) after (d), forming an outer ply vane woven-fiber formed body constituted of reinforcement fiber on a surface of the integrated body;
(f) after (e), infiltrating matrix into the outer ply vane woven-fiber formed body to turn the outer ply vane woven-fiber formed body into the outer ply vane; and
(g) during or after (f), removing the supplemental jig away from the outer ply vane woven-fiber formed body or the outer ply vane.

2. The method for manufacturing a vane according to claim 1, wherein
the composite material is ceramic matrix composite or carbon-based composite material.

3. A method for manufacturing a vane that is to be used in a turbine or a compressor of a gas turbine engine and made of composite material constituted of reinforcement fiber and matrix,
the vane comprising:
an outer ply vane that is made of composite material constituted of reinforcement fiber and matrix; and
an inner ply vane that is made of composite material constituted of reinforcement fiber and matrix, and extends from an inner surface of the outer ply vane on a leading-edge side toward an inner surface of the outer ply vane on a trailing-edge side, a convex-side outer surface thereof being stuck integrally with a convex-side inner surface of the outer ply vane, and a concave-side outer surface thereof being stuck integrally with a concave-side inner surface of the outer ply vane;
wherein a rear space is segmented within the outer ply vane between an outer surface of the inner ply vane on the trailing-edge side and an inner surface of the outer ply vane on the trailing-edge side, and
the method comprising:
(A) forming an inner ply vane woven-fiber formed body constituted of reinforcement fiber on a surface of a jig that has a surface profile corresponding to an inner surface profile of the inner ply vane;
(B) after (A), integrating a supplemental jig that has a surface profile corresponding to the rear space and the inner ply vane woven-fiber formed body to form a integrated body;
(C) after (B), forming an outer ply vane woven-fiber formed body constituted of reinforcement fiber on a surface of the integrated body;
(D) after (C), infiltrating matrix into the inner ply vane woven-fiber formed body and the outer ply vane woven-fiber formed body to turn the inner ply vane woven-fiber formed body and the outer ply vane woven-fiber formed body into the inner ply vane and the outer ply vane, respectively; and
(E) during or after (D), removing the jig away from the inner ply vane woven-fiber formed body or the inner ply vane, and removing the supplemental jig away from the outer ply vane woven-fiber formed body or the outer ply vane.

4. The method for manufacturing a vane according to claim 3, wherein
the composite material is ceramic matrix composite or carbon-based composite material.

5. A method for manufacturing a vane that is to be used in a turbine or a compressor of a gas turbine engine and made of composite material constituted of reinforcement fiber and matrix,
the vane comprising:
an outer ply vane that is made of composite material constituted of reinforcement fiber and matrix; and
an inner ply vane that is made of composite material constituted of reinforcement fiber and matrix, and extends from an inner surface of the outer ply vane on a leading-edge side toward an inner surface of the outer ply vane on a trailing-edge side, a convex-side outer surface thereof being stuck integrally with a convex-side inner surface of the outer ply vane, and a concave-side outer surface thereof being stuck integrally with a concave-side inner surface of the outer ply vane;
wherein a rear space is segmented within the outer ply vane between an outer surface of the inner ply vane on the trailing-edge side and an inner surface of the outer ply vane on the trailing-edge side, and
the method comprising:
(i) forming an inner ply vane woven-fiber formed body constituted of reinforcement fiber on a surface of a jig that has a surface profile corresponding to an inner surface profile of the inner ply vane;
(ii) infiltrating matrix into the inner ply vane woven-fiber formed body to turn the inner ply vane woven-fiber formed body into the inner ply vane;
(iii) during or after (ii), removing the jig away from the inner ply vane woven-fiber formed body or the inner ply vane;
(iv) after (ii) and (iii), integrating a rear filled member that has a surface profile corresponding to the rear space and the inner ply vane to form a integrated body;
(v) after (iv), forming an outer ply vane woven-fiber formed body constituted of reinforcement fiber on a surface of the integrated body; and
(vi) after (v), infiltrating matrix into the outer ply vane woven-fiber formed body to turn the outer ply vane woven-fiber formed body into the outer ply vane.

6. The method for manufacturing a vane according to claim 5, wherein
the composite material is ceramic matrix composite or carbon-based composite material.

7. A method for manufacturing a vane that is to be used in a turbine or a compressor of a gas turbine engine and made of composite material constituted of reinforcement fiber and matrix,
the vane comprising:
an outer ply vane that is made of composite material constituted of reinforcement fiber and matrix; and
an inner ply vane that is made of composite material constituted of reinforcement fiber and matrix, and extends from an inner surface of the outer ply vane on a leading-edge side toward an inner surface of the outer ply vane on a trailing-edge side, a convex-side outer surface thereof being stuck integrally with a convex-side inner surface of the outer ply vane, and a concave-side outer surface thereof being stuck integrally with a concave-side inner surface of the outer ply vane;
wherein a rear space is segmented within the outer ply vane between an outer surface of the inner ply vane on the trailing-edge side and an inner surface of the outer ply vane on the trailing-edge side, and
the method comprising:
(I) forming an inner ply vane woven-fiber formed body constituted of reinforcement fiber on a surface of a jig that has a surface profile corresponding to an inner surface profile of the inner ply vane;
(II) after (I), integrating a rear filled member that has a surface profile corresponding to the rear space and the inner ply vane woven-fiber formed body to form a integrated body;
(III) after (II), forming an outer ply vane woven-fiber formed body constituted of reinforcement fiber on a surface of the integrated body;
(IV) after (III), infiltrating matrix into the inner ply vane woven-fiber formed body and the outer ply vane woven-fiber formed body to turn the inner ply vane woven-fiber formed body and the outer ply vane woven-fiber formed body into the inner ply vane and the outer ply vane, respectively; and
(V) during or after (IV), removing the jig away from the inner ply vane woven-fiber formed body or the inner ply vane.

8. The method for manufacturing a vane according to claim 7, wherein
the composite material is ceramic matrix composite or carbon-based composite material.
